# NEW EUROPEAN PATENT SPECIFICATION

(11) **EP 2 215 919 B2**
(45) Date of publication and mention of the opposition decision: **04.11.2015**
(45) Mention of the grant of the patent: 15.02.2012
(21) Application number: 10164315.3
(22) Date of filing: 18.09.2003
(51) Int. Cl.: A43B 7/12, A43B 13/16

(54) **Waterproof and breathable sole for shoes, and shoe manufactured with such sole**
Wasserdichte und atmungsaktive Sohle für Schuhe und mit einer solchen Sohle hergestellter Schuh
Semelle imperméable à l'eau et respirante pour souliers et soulier équipé de cette semelle

(30) Priority: 24.09.2002 IT PD20020246
(43) Date of publication of application: 11.08.2010
(62) Divisional of application: 03769286.0
(73) Proprietor: Geox S.p.A., 31044 Montebelluna Località Biadene (Treviso) (IT)
(72) Inventor: Polegato Moretti, Mario, 31035, Crocetta Del Montello TV (IT)
(74) Representative: Modiano, Micaela Nadia

(56) References cited:
- EP-A- 0 713 658
- WO-A-02/32246
- WO-A-97/14326
- WO-A-98/51177
- WO-A1-97/28711
- US-A1- 2001 003 875

## Description

### Technical Field

The present invention relates to an improved waterproof and breathable sole for shoes and to the shoe manufactured with such sole.

### Background Art

Waterproof and breathable soles made of plastics for shoes are already known.

One of such soles is disclosed in WO 97/14326.

In this case, the sole comprises:
- a mid-sole with a membrane made of a material that is impermeable to water and permeable to water vapor, associated with a lower protective layer of a material that is resistant to hydrolysis, water-repellent, breathable and/or perforated;
- a tread made of perforated elastomer, which is joined perimetrically and hermetically to the mid-sole.

The waterproof and breathable sole disclosed in WO 98/51177 is also known; it comprises a preassembled insert in which there is a membrane that is impermeable to water and permeable to water vapor, associated with a lower protective layer made of a material that is resistant to hydrolysis, water-repellent, breathable and/or perforated.

The insert is completed by an element that is overmolded or over-assembled, surrounds the membrane and the protective layer, and is joined hermetically to them.

The insert is part of a mid-sole and is joined, together with said mid-sole, to a tread made of perforated plastic material, which is overmolded or over-assembled.

In both cases, the protective layer arranged below the membrane is designed to protect it against piercing due to foreign objects that have accidentally passed through the holes.

The protective layer is usually made of felt and is coupled to the membrane in a breathable manner (by means of spots of thermoplastic adhesive, for example of the polyurethane-based type) to allow the passage of the vapor from the inside of the shoe toward the outside through the holes provided in the tread.

Breathable and waterproof soles for shoes are also known from USSN 09/978,634 and EPA No. 01124210.4 and comprise, at least along part of their extension, a lower waterproof component that constitutes the tread, an upper component with a supporting structure that is provided with holes connected to outlets at least on the upper and edge surfaces, and a waterproof vapor-permeable membrane that surrounds externally at least the outward-facing regions of the upper component

The lower component, the upper component and the membrane are joined hermetically in the regions of possible internal water infiltration.

Although the above described soles have now been available commercially for years and are unanimously acknowledged as being capable of producing an exchange of heat and water vapor between the microclimate inside the shoe and the external microclimate, such soles, in some cases, such as for example use on the part of users with quantitatively higher-than-average foot perspiration, have been found to have a breathability that is insufficient to fully dispose of the generated vapor and ensure the correct microclimate inside the shoe.

The structure of the above described soles in fact has, at least in a downward region, layers of microperforated plastic material, i.e., provided with holes having a diameter on the order of 1-2 millimeters, and the total area of the microperforations in any case limits the area of the membrane that is actually affected by the exchange of heat and vapor.

WO 02132246 discloses a sole which serves as bases for claims 1 and 12, and a shoe which serves as basis for claim 11.
WO 9728711 A1 teaches a breathable and watertight outsole for footwear in which the outsole has a two-layer structure. The two-layer structure contains an elastic and water vapor-permeable inner layer and an outer layer that covers less than 70% of the inner layer. A functional layer is provided above the inner layer.

### Disclosure of the Invention

The aim of the present invention is to provide a waterproof and breathable sole for shoes, and the corresponding shoe, having an improved structure that is capable of utilizing to the maximum extent the breathability of the membrane that is impermeable to water and permeable to water vapor.

Within this aim, an object of the invention is to provide a waterproof and breathable sole for shoes having a structure that allows to enlarge the area of the membrane until it affects substantially the entire sole of the foot.

Another object is to provide a sole that does not entail particular constructive complications with respect to conventional soles.

Another object is to provide a sole whose costs are competitive with respect to conventional types.

This aim and these and other objects that will become better apparent hereinafter are achieved by a waterproof and breathable sole for shoes having a structure according to claims 1 and 12. Furthermore, the present invention provides for a shoe according to claim 11.

### Brief description of the drawings

Further characteristics and advantages of the present invention will become better apparent from the detailed description of some embodiments thereof, illustrated by way of non-limitative example in the accompanying drawings, wherein:
Figure 1 is a longitudinal sectional view of a waterproof and breathable sole for shoes having the structure which does not form part of the invention;
Figure 2 is an enlarged-scale sectional view of a detail of the sole of Figure 1;
Figure 3 is an enlarged-scale sectional view of a detail of a variation of the sole of Figure 1;
Figure 4 is an exploded view of the components of the variation of Figure 3;
Figure 5 is a sectional view, taken along a longitudinal plane, of a waterproof and breathable sole for shoes having the structure which does not form part of the invention in a constructive variation;
Figure 6 is an exploded sectional view, taken along a longitudinal plane, of a waterproof and breathable sole for shoes having the structure according to the invention;
Figure 7 is a sectional view, taken along a longitudinal plane, of the sole of Figure 6 in the assembled condition;
Figure 8 is a bottom perspective view of a shoe provided with the sole of Figures 6 and 7;
Figure 9 is an enlarged-scale sectional view of a detail of Figure 7.

### Ways of carrying out the invention

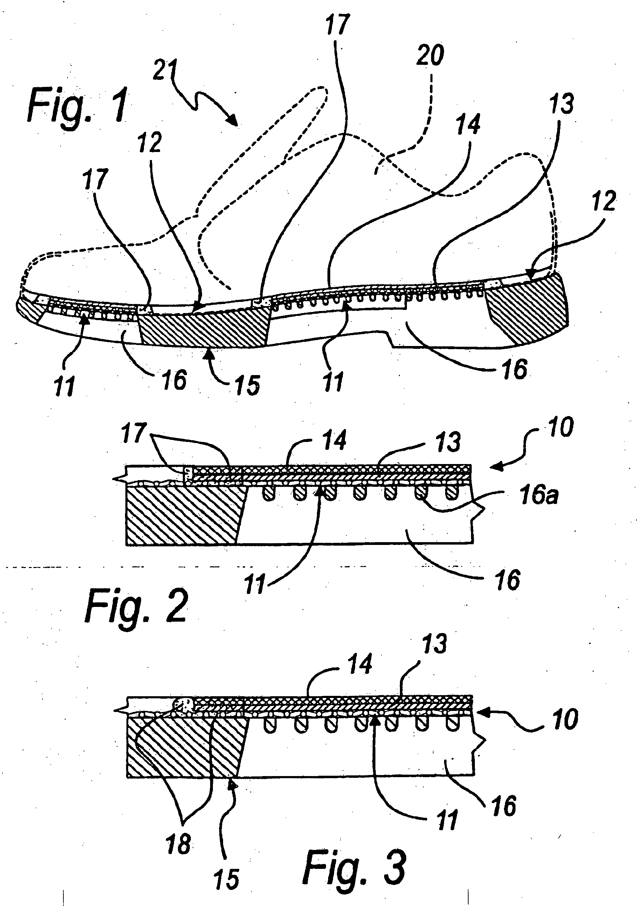

With reference to Figures 1 to 4, a waterproof and breathable sole for shoes has, in this embodiment which does not from part of the invention, a structure that comprises a supporting layer 10 which is made of net, felt or other diffusely perforated material in preset macroportions 11.

The supporting layer 10 constitutes, in this case, the assembly insole of the shoe.

The term "macroportion" is used to reference portions of area preferably on the order of at least one square centimeter.

In the other portions 12, the supporting layer 10 can be constituted by a fine mesh of synthetic material, leather or other commonly used materials.

The structure also comprises a membrane 13, which is made of a material that is impermeable to water and permeable to water vapor (which is commonly commercially available and is made for example of expanded polytetrafluoroethylene), laminated onto a fine mesh 14 for supporting it, which lies above it, is made of synthetic material, and is arranged above the supporting layer 10 at at least the macroportions 11, which it covers.

The membrane 13 can be made of airtight material or of air-permeable material.

The membrane 13 can be coupled by means of spots of glue (not shown in the figures) to the supporting layer 10 in the regions of contact.

A tread 15 made of plastic material has through macroperforations 16 at the macroportions 11 and is joined hermetically to the membrane 13 and to the supporting layer 10 at least at the perimeters of the macroportions 11.

The through macroperforations 16 can be crossed by cross-members 16a, which prevent transverse deformations of the assembly by acting as tension members in the deformations that occur as a consequence of use.

The coupling (Figures 1 and 2) can be provided for example by means of a perimetric layer 17 of adhesive, which is spread so as to penetrate, when the components are joined, through the meshes of the net and join monolithically the tread 15 and the membrane 13.

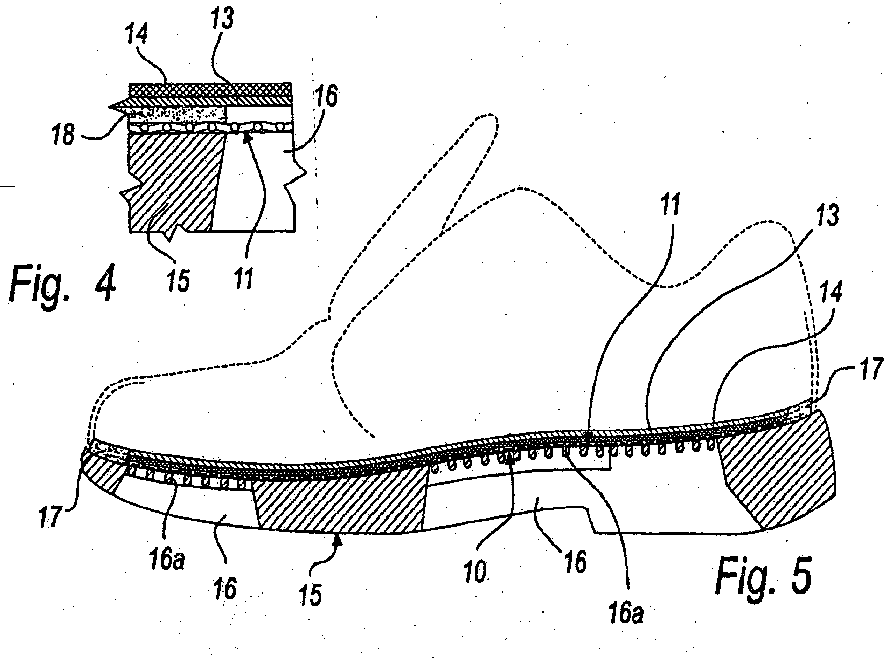

As an alternative (Figures 3 and 4), it is possible to arrange between the supporting layer 10 and the membrane 13, or between the tread 15 and the supporting layer 10, a film 18 made of PVC or PU and then perform a high-frequency welding between the tread 15 and the membrane 13 by melting the film 18, with penetration thereof between the meshes of the net so as to join the components monolithically.

As a further alternative, it is possible to perform high-frequency welding of the layer 10 and the membrane 13 to the film 18 and then glue the assembly to the tread 15.

An inner sole, not shown in the figures, made of breathable or diffusely perforated material, for supporting the foot, can be arranged above the supporting layer 10 and the membrane 13 with the fine mesh 14.

The described sole can be applied, in the commonly known ways, to an upper 20 of any kind so as to constitute a shoe 21.

With reference to Figure 5, in a slightly different embodiment it is possible to provide a single macroportion 11 that affects the entire sole of the foot without portions 12, regardless of the arrangement of the through macroperforations 16 of the tread 15.

In this case, the membrane 13 and its support 14 also affect the entire sole of the foot.

The glue 17 or the film 18 are arranged perimetrically.

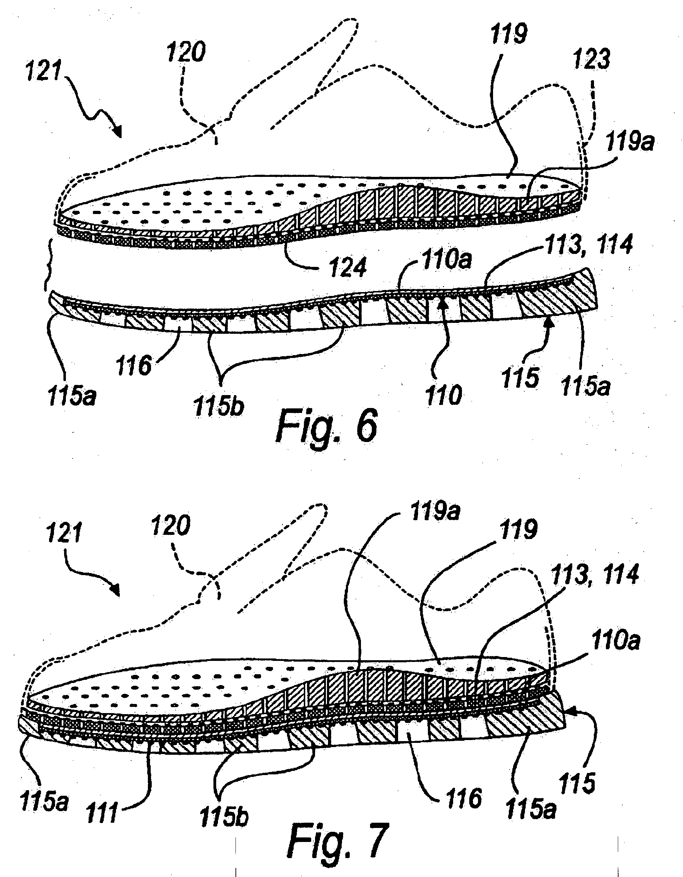

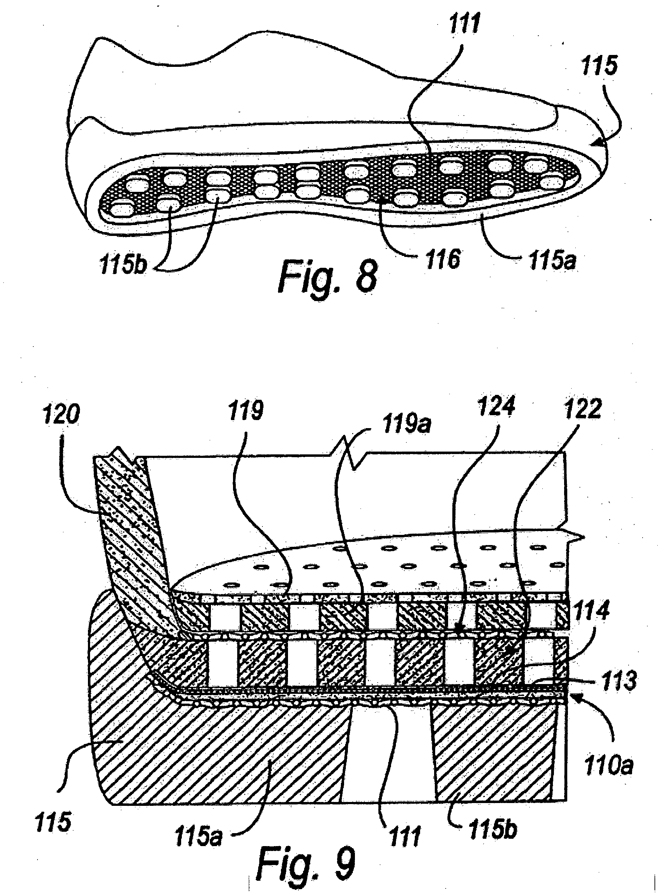

With reference now to Figures 6 to 9, a waterproof and breathable sole for shoes according to the invention has a structure that comprises a supporting layer 110 that is completely made of net, felt or other diffusely perforated material, which accordingly constitutes a single large macroportion 111.

The sole again comprises a membrane 113 made of a material that is impermeable to water and permeable to water vapor (commonly commercially available and made for example of expanded polytetrafluoroethylene), laminated together with a fine mesh 114 for supporting it which lies above it, is made of synthetic material and is arranged above the supporting layer 110, which it covers completely.

The membrane 113 can be made of airtight material or air-permeable material.

The membrane 113 is preferably coupled by means of spots of glue to the supporting layer 110.

It is possible to arrange a protective layer 110a, made for example of felt, below the membrane 113, for example if the supporting layer is made of net.

A tread 115 made of plastic material is assembled to the supporting layer 110 and is joined hermetically to the membrane 113 at least at the peripheral region of said membrane.

According to the invention as defined by claims 1 and 11, the coupling is provided by directly injecting the tread 115 onto the supporting layer 110 in a mold, with at least perimetric penetration through the meshes of the net or of the felt that is bordered with net so as to reach the membrane 113. According to a non claimed alternative, instead of being bordered with net, the felt can be appropriately reduced in thickness at its perimeter or perforated perimetrically to provide for the above coupling.

The tread 115 is provided so as to form macroperforations 116, for example a single large through macroperforation 116 that affects substantially all the sole of the foot, except for the perimeter 115a, which is interrupted by protrusions 115b that form, together with the perimeter 115a, the surface for contact with the ground.

The coupling between the tread 115 and the supporting layer 110 can be obtained also in the manners described in the first embodiment, i.e., by gluing or high-frequency welding.
In particular, according to the invention as defined by claim 12, the coupling is provided by means of a perimetric layer of adhesive, which is spread so as to penetrate, when the components are joined, through the meshes of the net and join monolithically the tread 115 and the membrane 113.

The sole can be coupled to an upper 120, so as to provide a shoe 121 that is assembled on an assembly insole 124 and is optionally coupled in a downward region to a filler layer 122 made of an expanded material such as diffusely perforated EVA, coconut fibers, etcetera.

The layer 122, when it is made of diffusely perforated EVA or the like (therefore inherently waterproof but rendered air-permeable), can be used as a means for the perimetric hermetic high-frequency welding from above of the membrane 113 to the upper 120.

The subsequent gluing of the tread 115 need not necessarily be hermetic.

The coupling between the sole and the upper 120 is in the peripheral region of said assembly insole and is provided for example by gluing or high-frequency welding.

An inner sole 119 made of breathable or diffusely perforated material can be arranged above the assembly insole 124.

The inner sole 119 can also be coupled in a downward region to a shock-absorbing layer 119a made of polyethylene or the like, which is diffusely perforated and anatomically contoured.

Other layers, not shown, such as cleaning insoles, absorbent layers et cetera, can be provided.

In practice it has been observed that the intended aim and objects of the present invention have been achieved.

A waterproof and breathable sole for shoes has in fact been provided whose structure is capable of utilizing to the fullest extent the breathability of the waterproof vapor-permeable membrane.

The structure allows to enlarge the area of the membrane until it affects substantially the entire sole of the foot.

The manufacture of the sole does not entail particular constructive complications with respect to conventional soles.

## Claims

1. A waterproof and breathable sole for shoes having a structure that is **characterized in that** it comprises:
-- a supporting layer (110) that is completely made of net or felt, which accordingly constitutes a single large macroportion (111);
-- a membrane (113) that is made of a material that is impermeable to water and permeable to water vapor and is associated above said supporting layer (110) at least in said macroportion (111) which it covers;
-- a tread (115) made of plastic material, with at least one through macroperforation (116) at said macroportion (111),
said tread (115) having a ground contact surface formed by a perimeter (115a) and protrusions (115b) extending through said at least one through macroperforatiori (116),
said tread (115) being joined hermetically to said membrane (113) and to said supporting layer (110) at least at the perimeter of said macroportion (111),
wherein said tread (115) is injected directly into a mold onto said supporting layer (110) with at least perimetric penetration through the meshes of said net or of the felt, which is bordered with net, so as to reach and join hermetically said membrane (113).

2. The sole according to claim 1 or 12, **characterized in that** said membrane (113) made of waterproof and vapor-permeable material is laminated together with a fine mesh (114) for supporting it, which lies above it and is made of synthetic material.

3. The sole according to claim 1 or 12, **characterized in that** said membrane (113) is coupled by means of spots of glue to said supporting layer (110) in the contact regions.

4. The sole according to claim 1 or 12, **characterized in that** said supporting layer (110) is entirely made of mesh that constitutes said single large macroportion (111) that is covered in an upward region by said membrane (113) and said tread (115) made of plastic material is assembled to said supporting layer (110) and joined hermetically to said membrane (113) at least at its peripheral region.

5. The sole according to claim 4, **characterized in that** said tread has substantially one single large through macroperforation (116) that affects substantially all of the sole of the foot except for said perimeter (115a), said macroperforation (116) being delimited by said protrusions (115b).

6. A shoe with a sole according to any,one of the preceding claims or according to claim 12, **characterized in that** it comprises an upper (120) that is assembled to an assembly insole (124) and is coupled to said sole at the peripheral region of said insole.

7. The shoe according to claim 6, **characterized in that** the coupling between said assembly insole (124), said upper (120) and said sole is provided by gluing or high-frequency welding.

8. The shoe according to claim 6 or 7, **characterized in that** said assembly insole is coupled in a downward region with respect to a filler layer (122) made of a material such as diffusely perforated EVA, coconut, et cetera.

9. The shoe according to claim 6, 7 or 8, **characterized in that** an inner sole (119) made of breathable or diffusely perforated material is arranged above said assembly insole (124).

10. The shoe according to claim 9, **characterized in that** said inner sole (119) is coupled, in a downward region, to a layer (119a) made of polyethylene or the like that is diffusely perforated and contoured anatomically.

11. A shoe having a sole that comprises:
-- a supporting layer (110) that is completely made of net or felt, which accordingly constitutes a single large macroportion (111);
-- a membrane (113), which is made of a material that is impermeable to water and vapor-permeable and is associated in an upward region with said supporting layer (110) at least in said macroportion (111), which it covers;
-- a tread (115), which is made of plastic material with at least one through macroperforation (116) at said macroportion (111),
said tread (115) having a ground contact surface formed by a perimeter (115a) and protrusions (115b) extending through said at least one through macroperforation (116),
said shoe further comprising an upper (120) that is assembled on an assembly insole (124) that is coupled in a downward region, with respect to a layer (122) made of a material such as diffusely perforated EVA or the like, which constitutes the means for the hermetic joining of said membrane (113) to said upper (120) from above, perimetrically with respect to said macroportion (111), said tread (115) being glued perimetrically to the assembly,
the hermetic joining consisting of hermetic high-frequency welding,
wherein said tread (115) is injected directly into a mold onto said supporting layer (110) with at least perimetric penetration through the meshes of said net or of the felt, which is bordered with net, so as to reach and join hermetically said membrane (113).

12. A waterproof and breathable sole for shoes having a structure that is **characterized in that** it comprises:
-- a supporting layer (110) that is completely made of net, which accordingly constitutes a single large macroportion (111);
-- a membrane (113) that is made of a material that is impermeable to water and permeable to water vapor and is associated above said supporting layer (110) at least in said macroportion (111), which it covers;
-- a tread (115) made of plastic material, with at least one through macroperforation (116) at said macroportion (111),
said tread (115) having a ground contact surface formed by a perimeter (115a) and protrusions (115b) extending through said at least one through macroperforation (116),
said tread (115) being joined hermetically to said membrane (113) and to said supporting layer (110) at least at the perimeter of said macroportion (111),
wherein the joining is provided by means of a perimetric layer of adhesive, which is spread so as to penetrate, when said supporting layer (110), said membrane (113) and said tread (115) are joined, through the meshes of the net and joins monolithically the tread (115) and the membrane (113).

## Patentansprüche

1. Wasserdichte und atmungsaktive Sohle für Schuhe mit einer Struktur, die **dadurch gekennzeichnet ist, dass** sie Folgendes umfasst:
- - eine tragende Schicht (110), welche vollständig aus Maschenwerk oder Filz besteht, die demzufolge einen einzelnen großflächigen Makroabschnitt (111) ausbildet;
- - eine Membran (113), die aus einem Material besteht, das wasserundurchlässig und wasserdampfdurchlässig ist und oberhalb der tragenden Schicht (110) zumindest in dem Makroabschnitt (111), den sie bedeckt, verbunden ist;
- - die Laufsohle (115) aus Kunststoffmaterial, mit zumindest einer durchgängigen Makroperforation (116) in dem Makroabschnitt (111),
bei der die Laufsohle (115) eine Bodenkontaktfläche aufweist, die aus einem Umfang (115a) und Vorsprüngen (115b) ausgebildet ist, die sich durch die zumindest eine durchgängige Makroperforation (116) erstrecken,
bei der die Laufsohle (115) hermetisch mit der Membran (113) und zumindest am Umfang der Makroperforation (111) mit der tragenden Schicht (110) verbunden ist,
wobei die Laufsohle (115) direkt in eine Form auf die tragende Schicht (110) eingespritzt wird, wobei zumindest das Maschengewebe des Maschenwerks oder der Filz perimetrisch durchdrungen wird, welche durch Maschenwerk begrenzt sind, um die Membran (113) zu erreichen und sich hermetisch mit ihr zu verbinden.

2. Sohle nach Anspruch 1 oder 12, **dadurch gekennzeichnet, dass** die Membran (113) aus wasserdichtem und dampfdurchlässigem Material mit einem feinen Maschengewebe (114) zum Tragen desselben zusammenlaminiert ist, welches über ihr liegt und aus synthetischem Material besteht.

3. Sohle nach Anspruch 1 oder 12, **dadurch gekennzeichnet, dass** die Membran (113) durch Punkte aus Klebstoff mit der tragenden Schicht (110) in den Kontaktbereichen gekoppelt ist.

4. Sohle nach Anspruch 1 oder 12, **dadurch gekennzeichnet, dass** die tragende Schicht (110) vollständig aus Maschengewebe besteht, das den einzelnen großflächigen Makroabschnitt (111) bildet, welcher in einem oberen Bereich durch die Membran (113) bedeckt ist und die aus Kunststoffmaterial aufgebaute Laufsohle (115) mit der tragenden Schicht (110) und mit der Membran (113) zumindest in ihrem Randbereich hermetisch verbunden ist.

5. Sohle nach Anspruch 4, **dadurch gekennzeichnet, dass** die Laufsohle im Wesentlichen eine einzelne großflächige durchgehende Makroperforation (116) aufweist, die im Wesentlichen die ganze Fußsohle mit Ausnahme des Umfangs (115a) betrifft, wobei die Makroperforation (116) durch die Vorsprünge (115b) begrenzt ist.

6. Schuh mit einer Sohle nach einem der vorherigen Ansprüche oder nach Anspruch 12, **dadurch gekennzeichnet, dass** sie einen Schaft (120) umfasst, der mit einer Verbund-Brandsohle (124) verbunden ist und mit der Sohle im Randbereich der Brandsohle gekoppelt ist.

7. Schuh nach Anspruch 6, **dadurch gekennzeichnet, dass** die Kopplung zwischen der Verbund-Brandsohle (124), dem Schaft (120) und der Sohle durch Verkleben oder Hochfrequenz-Verschweißen vorgesehen ist.

8. Schuh nach Anspruch 6 oder 7, **dadurch gekennzeichnet, dass** die Verbund-Brandsohle in einem unteren Bereich mit einer Füllschicht (122) gekoppelt ist, die aus einem Material, wie z.B. großflächig perforiertem EVA, Kokosfasern, usw., besteht.

9. Schuh nach Anspruch 6, 7 oder 8, **dadurch gekennzeichnet, dass** eine aus atmungsaktivem oder großflächig perforiertem Material bestehende Innensohle (119) über der Verbund-Brandsohle (124) angeordnet ist.

10. Schuh nach Anspruch 9, **dadurch gekennzeichnet, dass** die Innensohle (119) in einem unteren Bereich mit einer Schicht (119a) aus Polyethylen oder dergleichen gekoppelt ist, die großflächig perforiert und anatomisch konturiert ist.

11. Schuh mit einer Sohle, die Folgendes umfasst:
eine tragende Schicht (110), welche vollständig aus Maschenwerk oder Filz besteht, die demzufolge einen einzelnen großflächigen Makroabschnitt (111) ausbildet;
- - eine Membran (113), die aus einem Material besteht, das wasserundurchlässig und wasserdampfdurchlässig ist und in einem Bereich oberhalb mit der tragenden Schicht (110) zumindest in dem Makroabschnitt (111), den sie bedeckt, verbunden ist;
- - eine Laufsohle (115) aus Kunststoffmaterial, mit zumindest einer durchgängigen Makroperforation (116) in dem Makroabschnitt (111),
wobei die Laufsohle (115) eine Bodenkontaktfläche aufweist, die aus einem Umfang (115a) und Vorsprüngen (115b), die sich durch die zumindest eine durchgängige Makroperforation (116) erstrecken, ausgebildet ist,
wobei der Schuh weiterhin einen Schaft (120) umfasst, der perimetrisch hinsichtlich des Makroabschnitts (111)auf einer Verbund-Brandsohle (124) aufgebaut ist, welche in einem nach unten weisenden Bereich hinsichtlich einer Schicht (122) aus einem Material wie z.B. einem Material wie großflächig perforiertem EVA oder dergleichen gekoppelt ist, das das Mittel zum hermetischen Verschweißen der Membran (113) mit dem Schaft (120) von oben bildet, wobei die Laufsohle (115) perimetrisch mit dem Verbund verklebt ist.
das hermetische Verbinden aus hermetischem Hochfrequenz-Verschweißen besteht,
wobei die Laufsohle (115) direkt in eine Form auf die tragende Schicht (110) eingespritzt wird, wobei zumindest das Maschengewebe des Maschenwerks oder der Filz perimetrisch durchdrungen werden, welche durch Maschenwerk begrenzt ist, um die Membran (113) zu erreichen und sich hermetisch mit ihr zu verbinden.

12. Wasserdichte und atmungsaktive Sohle für Schuhe mit einer Struktur, die **dadurch gekennzeichnet ist, dass** sie Folgendes umfasst:
- - eine tragenden Schicht (110), welche vollständig aus Maschenwerk besteht, die demzufolge einen einzelnen großflächigen Makroabschnitt (111) ausbildet;
- - eine Membran (113), die aus einem Material besteht, das wasserundurchlässig und wasserdampfdurchlässig ist und oberhalb der tragenden Schicht (110) zumindest in dem Makroabschnitt (111), den sie bedeckt, verbunden ist;
- - eine Laufsohle (115) aus Kunststoffmaterial, mit zumindest einer durchgängigen Makroperforation (116) in dem Makroabschnitt (111),
wobei die Laufsohle (115) eine Bodenkontaktfläche aufweist, die aus einem Umfang (115a) ausgebildet ist und Vorsprüngen (115b), die sich durch die zumindest eine durchgängige Makroperforation (116) erstrecken,
wobei die Laufsohle (115) hermetisch mit der Membran (113) und zumindest am Umfang der Makroperforation (111) mit der tragenden Schicht (110) verbunden ist.
wobei das Verbinden mittels einer perimetrischen Lage einer Haftschicht erfolgt, die verteilt wird, um die Maschen des Maschenwerks zu durchdringen und um die Laufsohle (115) und die Membran (113) monolithisch beim Miteinanderverbinden der tragenden Schicht (110), der Membran (113) und der Laufsohle (115) zu verbinden.

## Revendications

1. Semelle de chaussure imperméable à l'eau et perméable à l'air destinée à des chaussures, qui présente une structure qui est **caractérisée en ce qu'**elle comprend :
- une couche support (110) qui est complètement réalisée en tulle ou en feutre, qui constitue en conséquence une seule grande macropartie (111) ;
- une membrane (113) qui est réalisée dans un matériau qui est imperméable à l'eau et qui est perméable à la vapeur d'eau, et qui est associée au-dessus de ladite couche support (110) au moins dans ladite macropartie (111) qu'elle couvre ;
- une semelle (115) qui est réalisée dans un matériau de matière plastique, avec au moins une macroperforation traversante (116) au niveau de ladite macropartie (111) ;
ladite semelle (115) présentant une surface de contact avec le sol formée par un périmètre (115a) et des saillies (115b) qui s'étendent à travers ladite ou lesdites macroperforations traversantes (116) ;
ladite semelle (115) étant jointe de manière hermétique à ladite membrane (113) et à ladite couche support (110) au moins au niveau du périmètre de ladite macropartie (111) ;
dans laquelle ladite semelle (115) est injectée de manière directe dans un moule sur ladite couche support (110) avec au moins une pénétration périmétrale à travers les mailles dudit tulle ou dudit feutre, qui est entouré avec ledit tulle, de façon à atteindre et à joindre de manière hermétique ladite membrane (113).

2. Semelle selon la revendication 1 ou la revendication 12, **caractérisée en ce que** ladite membrane (113) réalisée dans un matériau imperméable à l'eau et perméable à la vapeur, est stratifiée avec une maille fine (114) destinée à la supporter, qui se trouve au-dessus de celle-ci et qui est réalisée dans un matériau synthétique.

3. Semelle selon la revendication 1 ou la revendication 12, **caractérisée en ce que** ladite membrane (113) est accouplée, au moyen de points de colle, à ladite couche support (110) dans les régions de contact.

4. Semelle selon la revendication 1 ou la revendication 12, **caractérisée en ce que** ladite couche support (110) est entièrement réalisée dans une maille qui constitue ladite seule grande macropartie (111) qui est couverte dans une région vers le haut par ladite membrane (113), et ladite semelle (115) réalisée dans un matériau de matière plastique est assemblée à ladite couche support (110) et jointe de manière hermétique à ladite membrane (113) au moins au niveau de sa région périphérique.

5. Semelle selon la revendication 4, **caractérisée en ce que** ladite semelle présente sensiblement une seule grande macroperforation traversante (116) qui affecte sensiblement la totalité de la semelle du pied à l'exception dudit périmètre (115a), ladite macroperforation traversante (116) étant délimitée par lesdites saillies (115b).

6. Chaussure dotée d'une semelle selon l'une quelconque des revendications précédentes ou selon la revendication 12, **caractérisée en ce qu'**elle comprend une empeigne (120) qui est assemblée à une semelle intérieure d'assemblage (124) et qui est accouplée à ladite semelle au niveau de la région périphérique de ladite semelle intérieure.

7. Chaussure selon la revendication 6, **caractérisée en ce que** l'accouplement entre ladite semelle intérieure d'assemblage (124), ladite empeigne (120) et ladite semelle, est réalisé par collage ou par soudage par haute fréquence.

8. Chaussure selon la revendication 6 ou la revendication 7, **caractérisée en ce que** ladite semelle intérieure d'assemblage est accouplée dans une région vers le bas par rapport à une couche de matériau de remplissage (122), réalisée dans un matériau tel que de l'EVA perforé de manière diffuse, de la noix de coco, etc.

9. Chaussure selon les revendications 6, 7 ou 8, **caractérisée en ce qu'**une semelle intérieure (119), réalisée dans un matériau perméable à l'air ou perforé de manière diffuse, est agencée au-dessus de ladite semelle intérieure d'assemblage (124).

10. Chaussure selon la revendication 9, **caractérisée en ce que** ladite semelle intérieure (119) est accouplée, dans une région vers le bas, à une couche (119a) réalisée en polyéthylène ou similaire, qui est perforée de manière diffuse et qui est profilée de manière anatomique.

11. Chaussure présentant une semelle qui comprend :
- une couche support (110) qui est complètement réalisée en tulle ou en feutre, qui constitue en conséquence un seule grande macropartie (111) ;
- une membrane (113) qui est réalisée dans un matériau qui est imperméable à l'eau et qui est perméable à la vapeur d'eau, et qui est associée dans une région vers le haut à ladite couche support (110) au moins dans ladite macropartie (111) qu'elle couvre ;
- une semelle (115) qui est réalisée dans un matériau de matière plastique, avec au moins une macroperforation traversante (116) au niveau de ladite macropartie (111) ;
ladite semelle (115) présentant une surface de contact avec le sol formée par un périmètre (115a) et des saillies (115b) qui s'étendent à travers ladite au moins une macroperforation traversante (116) ;
ladite chaussure comprenant en outre une empeigne (120) qui est assemblée sur une semelle intérieure d'assemblage (124) qui est accouplée dans une région vers le bas, par rapport à une couche (122) réalisée dans un matériau tel que de l'EVA perforé de manière diffuse ou similaire, qui constitue les moyens de jointure hermétique de ladite membrane (113) à ladite empeigne (120) à partir d'en haut, de manière périmétrale par rapport à ladite macropartie (111), ladite semelle (115) étant collée de manière périmétrale à l'assemblage ;
la jointure hermétique consistant en un soudage par haute fréquence hermétique ;
dans laquelle ladite semelle (115) est injectée de manière directe dans un moule sur ladite couche support (110) avec au moins une pénétration périmétrale à travers les mailles dudit tulle ou dudit feutre, qui est entouré avec ledit tulle, de façon à atteindre et à joindre de manière hermétique ladite membrane (113).

12. Semelle de chaussure imperméable à l'eau et perméable à l'air destinée à des chaussures, qui présente une structure qui est **caractérisée en ce qu'**elle comprend :
- une couche support (110) qui est complètement réalisée en tulle, qui constitue en conséquence un seule grande macropartie (111) ;
- une membrane (113) qui est réalisée dans un matériau qui est imperméable à l'eau et qui est perméable à la vapeur d'eau, et qui est associée au-dessus de ladite couche support (110) au moins dans ladite macropartie (111) qu'elle couvre ;
- une semelle (115) qui est réalisée dans un matériau de matière plastique, avec au moins une macroperforation traversante (116) au niveau de ladite macropartie (111) ;
ladite semelle (115) présentant une surface de contact avec le sol formée par un périmètre (115a) et des saillies (115b) qui s'étendent à travers ladite ou lesdites macroperforations traversantes (116) ;
ladite semelle (115) étant jointe de manière hermétique à ladite membrane (113) et à ladite couche support (110) au moins au niveau du périmètre de ladite macropartie (111) ;
dans laquelle la jointure est réalisée au moyen d'une couche périmétrale d'adhésif, qui est étalée de façon à pénétrer, lorsque ladite couche support (110), ladite membrane (113) et ladite semelle (115) sont jointes, à travers les mailles du tulle, et joint de manière monolithique la semelle (115) et la membrane (113).
